# EUROPEAN PATENT APPLICATION

(11) **EP 1 072 802 A1**
(43) Date of publication of application: **31.01.2001**
(21) Application number: 00902930.7
(22) Date of filing: 10.02.2000
(51) Int. Cl.: F16B 13/10, F16B 13/08, E04B 1/41

(54) **ANCHOR BOLT AND TOOL FOR INSTALLING THE BOLT**

(30) Priority: 12.02.1999 JP 3484999
(71) Applicant: Yamahiro Co., Ltd, Kawachinagano-shi, Osaka 586-0038 (JP)
(72) Inventor: Yamamoto, Hisayoshi, Kawachinagano-shi, Osaka 586-0038 (JP); Nishihara, Toshio, Kawachinagano-shi, Osaka 586-0038 (JP); Sato, Takayuki, Kawachinagano-shi, Osaka 586-0038 (JP); Miyazaki, Teruyoshi, Kawachinagano-shi, Osaka 586-0038 (JP)
(74) Representative: Lyndon-Stanford, Edward Willoughby Brooke
(86) International application number: JP0000774
(87) International publication number: WO0047905

(57) **Abstract**

An anchor bolt with tapping and drilling functions added thereto and a tool for exclusive use of the bolt, the anchor bolt (2) comprising an anchor rod (10) and an anchor sleeve (15) having a slit (15s) formed at the tip thereof, wherein the anchor rod is pulled up so as to expand the tip part of the anchor sleeve to fix it to a structural body such as concrete, threads (15n) are formed on the outer peripheral surface of the anchor sleeve (15), and an engaging part engaged with an installation tool is provided at the base end parts of both the anchor rod and anchor sleeve, whereby both the anchor rod and the anchor sleeve are rotated by the installation tool so that the threads formed on the outer peripheral surface of the anchor sleeve are screwed into the inner peripheral surface of a prepared hole (30h) in the structural body while female threads are formed efficiently on the inner peripheral surface of the prepared hole in the structural body, and a drill blade is fixed to the tip of the anchor bolt so as to form a self-drilling anchor bolt; the installation tool being capable of screwing the anchor bolt and tightening a fixing nut merely by using that single tool, and also using it for extracting the anchor bolt.

## Description

### TECHNICAL FIELD

The present invention relates to an anchor bolt (including anchor bolts having a self-drilling function) for use in mounting and securing fittings such as various kinds of fitments to structures built with concrete, brick or block, and a tool for use in mounting and removing said anchor bolt.

### BACKGROUND ART

As an conventional anchor may be exemplified an anchor which has been disclosed in Japanese Utility Model Application Laid. Open No.59-183513. The disclosed anchor comprises an engaging portion for driving tool formed on the basal end of a shank (anchor rod), a drill portion with a diameter larger than that of the shank provided on the leading end thereof, and a tubular member (anchor sleeve) fitted onto the shank, said shank having a small-diametered portion adjacent with the root of the drill portion, and a large-diametered portion disposed above the small-diametered portion, and there are provided a flange on the basal end of said tubular portion and a slit extending in an axial direction on the leading end side thereof.

In the event of mounting fitments on the concrete structure, for example, the process for mounting the anchor having a self-drilling function comprises steps of arranging fitments in suitable sections of the concrete, rotatably driving the anchor with a rotary tool, boring a hole by the flange of the tubular member until the flange reaches the upper face of the fitment, then driving the shank into the concrete by continuing the driving operation, whereby the large-diametered portion expands the leading end of the tubular member and the anchor is fixed to the concrete, and the fitment is also held tight at the same time.

Another anchor was disclosed in Japanese Patent Application Laid Open No.5-296218. This disclosed anchor includes a drill portion in the leading end thereof, a anchor body portion (anchor rod) provided with an engaging portion for the rotary tool at the basal end thereof, and a tubular body (anchor sleeve) fitted on the shank of the anchor body, which shank has an external thread formed on a suitable region of the outer peripheral face thereof, the tubular body has an internal thread provided on the inner peripheral face therewithin for threadedly engage with said external thread. Said internal thread is formed extending in a direction reverse to the direction in which the drill portion turns in its drilling operation. By turning the shank in such a reverse direction, the leading of the tubular body is retreated to the extent that part of the tubular body will swell out.

Thus, drilling operation for the fittings such as fitments and the concrete is carried out by turning the anchor body portion in a predetermined direction. After the operation, the anchor body portion is moved in a direction reverse to the direction in which the drilling operation takes place so that the leading end of the tubular body is lifted to expand outward until the anchor is held tight. With this prior art anchor with drilling function, the portion corresponding to the anchor sleeve is not given a driving force in the driving operation. In this connection, a problem arises that the anchor sleeve does not suitably turn together with the anchor body portion or anchor rod. Another problem is that unless the anchor sleeve turns well, chips or cuttings which may produce from the concrete structure can not be discharged smoothly, which may lead to reduced efficiency in drilling operation.

Furthermore, even if it so happened that the anchor must be removed from the structure, the anchor could not possibly be removed by the use of a tool with which the anchor has been engaged at the basal end thereof.

The task of the present invention is to provide an anchor bolt wherein tapping and drilling operations can be well performed while the anchor is being screwed or driven to ensure that the driving ability and efficiency will be increased, and if necessary, the anchor can be removed from the structure, and another task of the present invention is to provide a dedicated tool for mounting and dismounting the anchor bolt.

For the purpose of labor-saving in the operation, the present invention is intended to provide a tool which can singly screw, drive anchors, and clamp fixing nuts as well.

The principal characteristic feature of the present invention is that the dedicated tool is capable of suitably transmitting a driving force to the entire anchor or its part to effect an efficient screwing or driving operation.

### DISCLOSURE OF THE INVENTION

For solution of said tasks, a first invention of the present application is an anchor bolt is an anchor bolt comprising an anchor rod, and an anchor sleeve having slits on the leading end thereof, which is adapted to be fitted onto said anchor rod, wherein by lifting the anchor rod, the leading end of the anchor sleeve expands, and the anchor bolt is securely fixed to a structure, characterised in that a thread is formed on the outer peripheral face of the anchor sleeve, a tool engaging portion is provided for engaging with a tool at the basal end of the anchor rod, and/or an engaging portion is provided for engaging with the tool at the basal end of the anchor sleeve, and by turning both the anchor rod and anchor sleeve, or the anchor sleeve by the use of the tool, while being screwed into the structure, a thread formed on the outer peripheral face of the anchor sleeve may tap the inner peripheral face of a drill hole of the structure.

The anchor bolt in accordance with the first invention is of a lifting-and-fixing type wherein the anchor rod can be lifted and held tight.

In accordance with this invention, by turning the anchor sleeve and anchor rod, or the anchor sleeve, a driving force from the tool is sufficiently well transmitted, whereby while being screwed, the thread formed on the outer peripheral face of the anchor sleeve suitably taps the inner peripheral face of a drill hole of the structure, so that the anchor may be screwed into and held tight in the drill hole in a stable condition. In prior art anchor, since the anchor is screwed into a drill hole formed beforehand, the anchor is set within the drill hole in an unstable or rattling condition, and fixed afterward.

The thread formed on the outer peripheral face of the anchor sleeve taps the drill hole of the structure so as to afford increased retention of the anchor against pull.

On the other hand, if the anchor is dismounted from the structure, the anchor rod is driven with a hammer into the hole after removal of the fitting, and the tool is engaged with the engaging portion of the basal end of the anchor sleeve, and by turning this tool in a direction reverse to the direction in which the mounting operation took place, the anchor sleeve can be removed from the starting hole. Then, it is also possible that the anchor rod left behind in the hole is simply dislodged.

A second invention of the present application is the anchor bolt as defined in the first invention, characterised in that there is provided a drill blade on the leading end of the anchor rod for boring a hole in the structure, or both the structure and fitting.

In this second invention, the provision of the drill blade on the leading end of the anchor rod avoids the necessity of performing a hole using a tool such as concrete drill, so that the drill blade serves to bore a hole in the structure, and then, the anchor is put in position in the hole.

When the anchor rod and anchor sleeve turn together, the driving force from the tool can be fully and suitably transmitted to the anchor to maintain the driving ability or driving efficiency well, and discharging of chips or cuttings produced in the drilling operation can be achieved suitably. The thread formed on the outer peripheral face of the anchor sleeve may also help discharge chips or cuttings.

The thread formed on the outer peripheral face of the anchor sleeve may suitably cut into the inner peripheral face of the hole of the structure when the sleeve is expanded, thus resulting in increase of the retention against pull.

A third invention of the present application is an anchor bolt wherein a proper length of hole into which a pin is to be driven is formed in the center of the anchor body to extend from the basal end to the leading end of the anchor body portion, and slits are formed extending from the leading end of the anchor body to said hole, that a driving pin is fitted and driven into said hole, whereby the anchor body expands at the leading end thereof to such a degree that the anchor bolt may be fixed to the structure, characterised in that a thread is formed on the lower outer peripheral face of the anchor body, a tool engaging portion is provided at the basal end of the driving pin for engaging with tool and/or an engaging portion is provided on the basal end of the anchor body portion for engaging with the tool, and that by turning one or both of the driving pin and anchor body by the use of the tool, while tapping the inner peripheral face of a drill hole of the structure, a thread formed on the lower peripheral face of the anchor body portion is screwed into the hole of the structure.

The anchor bolt in accordance with the third invention is different from the first invention in that it is of a pin-driving-and-fixing type, but its operative effect is the same as that of the previous invention.

With this third invention, when the anchor body is turned with the driving pin, it can very suitably receive the driving force from the tool, whereby while tapping the inner peripheral face of the hole of the structure, the thread formed on the lower outer peripheral face of the anchor body is screwed, so that the anchor may be held tight in the hole in a stable condition.

Because the thread formed on the lower peripheral face of the anchor body taps the hole of the structure, the retention of this anchor against pull can be increased.

A fourth invention of the present application as defined in the third invention is characterised in that the cross sectional configuration of at least upper portion of the driving pin and the cross sectional configuration of at least upper portion of the pin driving hole formed in the shaft core of the anchor body are made in so a configuration that both driving pin and pin driving hole in a square or polygonal form can turn together, so that by turning the driving pin only by the tool, the anchor body can also be turned simultaneously.

With this invention, the cross sectional configurations of the driving pin and the hole of the anchor body in their respective upper portions are made in a square or polygonal form so that both of them can rotate together, therefore, the entire anchor can be turned by supplying the driving force to the driving pin only.

Said cross sectional configuration may be made in various forms other than square or polygon. In short, any configuration will do if the shapes of both the driving pin and anchor body portion may accord with each other in cross section to permit them to turn together. That is, any shape will be usable as long as it does not cause both of them to deviate circumferentially.

A fifth invention of the present application is the anchor bolt as defined in the third or fourth invention characterised in that a drill blade is provided on the leading end of the anchor body for boring a hole in the structure, or the structure and the fitting.

In this invention, the anchor as defined in the third or fourth invention is provided with a drill blade, whereby the anchor has acquired an additional self-drilling function.

When the anchor body and driving pin turn together, chips or cuttings produced at the structure can be discharged smoothly. The thread formed on the lower peripheral face of the anchor body may help discharging these chips or cuttings.

Additionally, when the anchor body expands at its lower end, the thread formed on the outer peripheral face thereof cuts into the inner peripheral face of the hole of the structure.

A sixth invention of the present application is a tool for mounting the anchor bolt having an anchor rod and an anchor sleeve or the like, to a structure comprising a rotary driving portion, a rotating shaft for transmitting the rotary driving force of said rotary driving portion, and a socket portion provided on the leading end of the rotating shaft, characterised in that said socket portion comprises an exterior socket portion positioned at the outside, and a rotational driving bit which is movable axially within the exterior socket portion, the exterior socket portion may turn with the rotation of the rotational driving bit, the rotational driving bit can change its position at least two places arranged in a longitudinal direction, one being at the leading end side and the other at the basal end within the exterior socket portion, an engaging hole is provided in the longitudinal direction of the center of the rotational driving bit so as to engage with the basal end of the anchor rod or the like, the leading end of the rotational driving bit can be engaged with the basal end of the anchor sleeve or the like, the exterior socket portion can be engaged with the nut which can threadedly engage with the anchor bolt when the rotational driving bit is securely placed in position at the basal end side within the exterior socket portion, and when the anchor is screwed or driven, the rotational driving bit securely positioned at the leading end side inside of the exterior socket portion engages at the basal ends with the anchor rod and anchor sleeve, or at the basal end with any of the two, whereby the driving force can be transmitted to the anchor bolt.

The tool in accordance with the sixth invention makes it possible to drive the anchor bolt in accordance with the first to fifth inventions into the concrete structure efficiently, whereby this tool may largely contribute to the labor-saving as compared with the conventional way of operative process.

In the anchor of a anchor rod-lifting and fixing type, with the rotational driving bit securely fixed to the leading end of the exterior socket portion, while it is engaged by the basal end with one or both of the anchor rod and anchor sleeve, the driving force is transmitted to the anchor to screw or drive it efficiently.

In the anchor of a pin-driving type, while engaged with one or both of the basal ends of driving pin and anchor body, the rotational driving bit can be screwed or driven.

With the anchor of a anchor rod-lifting-and-fixing system, after the anchor has been screwed or driven into the starting hole, the rotational driving bit is moved to and fixed at the basal end inside of the exterior socket portion, and the nut can be securely clamped by the exterior socket portion.

In the anchor of a pin-driving type, the driving pin can be fixed by driving it into the hole of the anchor body portion.

Moreover, in the anchor bolt of a lifting-and-fixing type in accordance with the first and second inventions, the anchor can be dislodged from the structure by the tool, as needed.

In the event of dislodging the anchor bolt of a lifting-and-fixing type, the fixing nut is dismounted so as to remove the fitting, the anchor rod is driven into the starting hole with a hammer, then the leading end of the rotational driving bit of the tool is engaged with the basal end of the anchor sleeve, and by turning the tool in a direction reverse to the direction in which the mounting operation takes place, the anchor sleeve can easily be removed, whereby the anchor can simply be removed from the structure.

Accordingly, in the anchor bolt of a lifting-and-fixing type, only a piece of the tool can be used to conduct all the operations, i.e. driving of anchor, fastening of nut, and additionally removing of anchor as needed. This may increase the workability largely and contribute to the labor-saving as well.

### BRIEF DESCRIPTION OF THE DRAWINGS

Fig. 1 is an exploded view of an anchor bolt in a first embodiment of the present invention, (A) being a front view of an anchor rod, (B) a front view of a drill blade attached to the leading end of the anchor rod, (C) a plan view of an anchor sleeve which is to be fitted onto the anchor rod, and (D) a front view of said anchor sleeve;
Fig.2 is a view illustrating the socket portion of a tool in accordance with the first embodiment of the present invention, (A) being a front view of a rotational driving bit inside of the socket portion, (B) a bottom view of said rotational driving bit, (C) a front view of an exterior socket portion, and (D) a bottom view of said exterior socket portion;
Fig.3 is a view illustrating the state in which the anchor bolt in accordance with the first embodiment and the socket portion of the tool are being engaged with each other, (A) being a partially cutaway view, (B) a bottom view of same, and (C) an enlarged cross sectional view taken along line D-D of (A);
Fig.4 is a view explanatory of the state in which the anchor bolt in accordance with the first embodiment of the present invention is about to be driven into a structure built with concrete;
Fig.5 is a view explanatory of the state in which a hole is being dug in the structure by the anchor bolt of the first embodiment attached to the socket portion of the tool;
Fig.6 is a view explanatory of the state in which the hole has just been formed in the structure by the anchor bolt with the help of the tool;
Fig.7 is a view explanatory of the state in which a fastening nut threadedly engaged with the anchor bolt via a washer is about to be fastened by the tool;
Fig.8 is a view explanatory of the state in which by continuing to fasten the nut further from the state in fig.7, the anchor bolt has been securely placed in the structure, whereby the fitting is fixed to the structure.
Fig.9 is a view illustrating the procedure steps of dislodging the anchor bolt in accordance with the first invention from the structure, (A) showing that after the removal of the fitting, the anchor rod is about to be driven into a hole by striking the basal end of the anchor rod with a hammer, and (B) showing that the anchor rod has reached the farthermost part of the hole as a result of the driving operation, thereby to release the anchor sleeve from expanding toward the leading end of the anchor sleeve;
Fig. 10 is a view illustrating the procedure steps of dislodging the anchor bolt in accordance with the first invention from the structure, (A) showing that the anchor sleeve engaged to the tool which had been used in the mounting operation for anchor bolt is about to be removed by turning it in a reverse direction, and (B) showing that the anchor sleeve is about to be removed out of the hole;
Fig.11 is a partially cutaway view explanatory of the state in which the anchor bolt in accordance with another embodiment of the present invention is about to be screwed into the hole formed in the structure beforehand by the tool engaged to the anchor bolt;
Fig. 12 is a view explanatory of the state in which the anchor bolt as shown in fig. 11 is being screwed into the hole of the structure by giving turning effort to the anchor bolt;
Fig.13 is a view illustrating that after the anchor bolt as shown in fig.11 had been screwed into the hole, and the fitting had been set in position, the nut has been fastened;
Fig.14 is an exploded view of an anchor bolt in accordance with further embodiment of the present invention, (A) being a plan view of an anchor body, (B) a front view of the anchor body, (C) a bottom view of the anchor body, (D) a front view of a drill blade, (E) a front view of a driving pin, and (F) a bottom view of the driving pin;
Fig. 15 is a view illustrating a socket portion of the tool in accordance with the further embodiment of the present invention, (A) being a front view of a rotational driving bit, (B) a bottom view of same, (C) a front view of an exterior socket portion, and (D) a bottom view of same;
Fig.16 is a view illustrating that the anchor bolt as shown in fig.14 and the rotary tool as shown in fig.15 are in a mutual engagement relation, (A) being a partially cutaway view, and (B) a cross sectional view taken on line B-B of (A);
Fig.17 is a partially cutaway view explanatory of the state in which the anchor bolt as shown in fig.14 is about to be driven into the structure;
Fig. 18 is a view explanatory of the state in which a hole is being formed in the structure by supplying a driving force of the tool to the anchor as shown in fig.14 which is kept attached to the socket portion of the tool;
Fig.19 is a view explanatory of the state in which with the anchor as shown in fig.14 attached to the structure, a driving pin is about to be driven with a hammer;
Fig.20 is a view explanatory of the state in which from the state in fig.19 on, the driving pin has been driven fully into the anchor body portion with the hammer;
Fig.21 is a view explanatory of the state in which the fitting has been fixed to the structure by the anchor bolt and tool as shown in figs.14 and 15 respectively;
Fig.22 is a partially cutaway view explanatory of the state in which an anchor bolt in accordance with another embodiment of the present invention is about to be screwed into the hole formed in the concrete structure by the tool engaged with the basal end of the anchor bolt;
Fig.23 is a partially cutaway view explanatory of the state in which the anchor bolt as shown in fig.22 is being screwed into the hole of the structure; and
Fig.24 is a partially cutaway view explanatory of the state in which after the anchor bolt as shown in fig.22 had been screwed into the structure, the driving pin has been driven into the hole of the anchor body portion with the hammer, thereby being secured to the structure.

### BEST MODE FOR CARRING OUR THE INVENTION

The embodiments of the present invention will be described with reference to the accompanying drawings. All the accompanying drawings illustrate all the embodiments of the present invention.

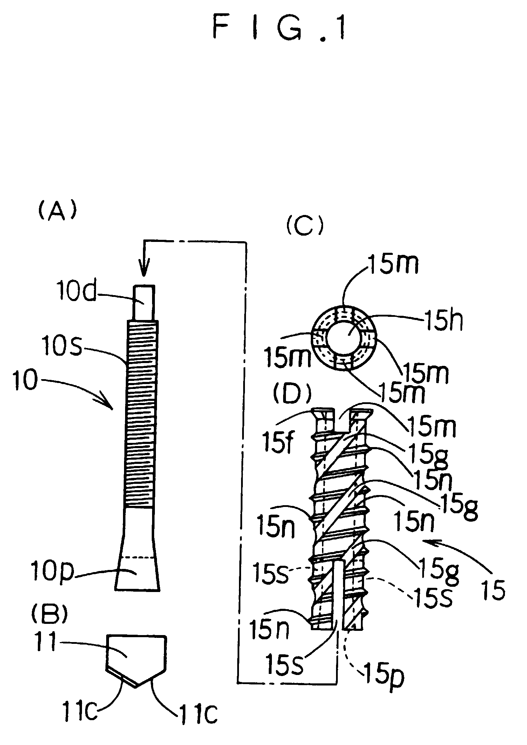

Figs.1 to 10 show an anchor bolt having self-drilling functions and a tool for use with it in accordance with a first embodiment of the present invention.

Fig. 1 is an exploded view of the anchor bolt in accordance with the present invention, (A) being a front view of an anchor rod, (B) a front view of a drill edge being attached to the leading end of the anchor rod, (C) a plan view of an anchor sleeve to be fitted onto the anchor rod, and (D) a front view of said anchor sleeve.

Anchor rod 10 as shown in fig.1(A) has a main rod-like portion which is circular in cross section, and having an external thread portion 10s formed with an external thread on the outer peripheral face of the base end thereof. There are provided on the upper end of the external thread portion 10s a tool engaging portion 10d having a square shape in cross section, to which rotational driving force is to be given by a rotary tool, and a leading end 10p formed like a trumpet (truncated cone) in a manner that it may increase gradually in its outer diameter. A groove is formed so as to pass through the axial center of the end face of this leading end 10p. A drill blade 11 is fit into the groove, and subjected to brazing, thus resulting in integral formation of the anchor rod with the drill blade 11.

The attaching of the drill blade may be freely effected in any method; in addition to brazing, caulking is also applicable for this purpose.

The drill blade 11 as shown by fig.1(B) is made of cemented carbide alloy, having cutting edge 11c, 11c formed on the lower plate-like margin, so that this drill blade 11 may be secured to the leading end (the lower side in the drawing) of the anchor rod 10.

It goes without saying that a cutting edge made from materials of higher hardness other than cemented carbide can be used as this drill blade 11.

The anchor sleeve 15 as shown in figs. 1(C) and (D) is adapted to be fit onto the outer peripheral face of said anchor rod 10, and has a cylindrical body including a through-hole 15h whose inner diameter is equal to or larger than the outer diameter of the external thread portion 10s of the anchor rod 10, and an inner peripheral face 15p formed on the end to contact with the leading end 10p of the anchor rod 10. Said inner peripheral face 15p gradually becomes larger downward in inner diameter, that is, tapered in cross section, so as to give rise to as less bumps as possible in the end margin where it combines with the leading end 10p of anchor rod 10. In the absence of such bumps can be better removed cutting chips which may be produced from the structures as of concrete to which the anchors are to be attached. The anchor sleeve 15 is formed at the leading end thereof with narrow openings extending axially from the end margin to provide slits 15s. These slits 15s are formed on the circumferential edge in the end of anchor sleeve 15 at four (4) points at intervals of 90 degrees (crosswise). The existence of such slits 15s makes it possible to clamp the anchor rod 10 upward so that the leading end 10p of the anchor rod 10 may expand the leading end of the anchor sleeve 15 conveniently.

The anchor sleeve 15 has grooves 15m arranged on the upper end at four points in a crisscross form. These grooves 15m may receive the projections provided on the top of a rotary tool as set forth later so that the anchor sleeve 15 can rotate together with the anchor rod 10.

There are provided helical grooves 15g on the entire outer peripheral face of the anchor sleeve 15 and a helical thread 15n which will be described later for helping remove chips and pulling out the anchor sleeve 15.

In another embodiment which will be described afterward, this thread 15n may perform its tapping function for forming internal threads on the inner peripheral face of starting holes of structures. However, in this embodiment, the thread 15n has no tapping function because the diameter of an opening which may be cut by the drill blade 11 is larger than the diameter of the thread 15n.

Furthermore, multiple projections (not shown) are formed on the lower face of a flange 15f of the basal end of the anchor sleeve 15 for preventing the sleeve from rotating when the anchor rod 10 is screwed upward. These projections are intended for avoidance of any possible rotation of the anchor sleeve 15 together with the anchor rod 10 at the time when the anchor rod 10 is screwed upward after the starting hole has been opened by this drilling anchor.

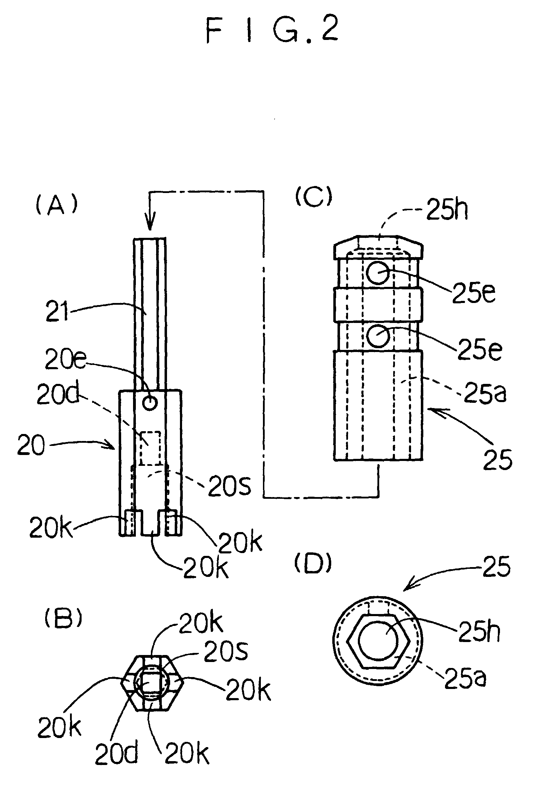

Fig.2 illustrates the socket portion of a rotary tool for mounting said anchor bolt on the structure or removing the anchor bolt from the structure, (A) being a front view of a rotational driving bit inside of the socket portion, (B) a bottom view of said rotational driving bit, (C) a front view of an exterior socket portion, and (D) a bottom view of the exterior socket portion.

The socket portion can be rotated by the rotating shaft 21 of the rotational driving bit 20 which is linked to the rotational driving portion of an electric powered rotary tool. The exterior socket portion 25 placed in the outside is turned concurrently with the rotation of the rotational driving bit 20.

That is, the rotational driving bit 20 has a regular hexagonal form in cross section like the nut, and a hole 25a formed in the center of the exterior socket portion 25 also has a regular hexagonal form in cross section. In this arrangement, the exterior socket portion 25 is driven by the rotational driving bit 20 when it rotates.

The rotating shaft 21 having a regular hexagonal form in its cross section is securely fixed to the basal end of the rotational driving bit 20 as shown in figs.(A)and (B). The rotational driving bit 20 to which the rotating shaft 21 is secured also has a regular hexagonal form in its cross section. A circular cavity 20s in cross section is formed in the rotary center of the bit, and an engaging hole 20d which has a square form in cross section is in turn formed to extend from the upper end of the cavity 20s upward.

The external thread portion 10s of the anchor rod 10 of said anchor bolt can be fitted into the cavity 20s, and the engaging hole 20d may receive the tool engaging portion 10d, whereby the rotational drive of the tool can be transmitted to the anchor.

Additionally, there are provided four engaging projections 20k formed crosswise in the leading end of the rotational driving bit 20. These engaging projections 20k can engage with the engaging groove 15m formed in the basal end of the anchor sleeve 15 of said anchor so that the rotational drive of the tool can be transmitted to the anchor sleeve 15, too.

The exterior socket portion 25 as shown in figs.2(C) and (D) is adapted to be fitted onto said rotational driving bit 20, and it has a cylindrical form and a hole 25a which has a hexagonal form in its cross section in which said exterior driving bit 20 may be fitted and formed extending in a longitudinal direction in the rotating center of thereof. A circular through-hole 25h is formed at the dead end of the base of the hole 25a. The rotating shaft 21 of the rotational driving bit 20 is adapted to pass through the through-hole 25h.

The rotational driving bit 20 is disposed in the hole 25a of the exterior socket portion 25 in a manner that the former may be securely placed in two upper and lower positions, i.e. the basal and leading ends. Namely, this fixation of driving bit 20 in the two upper and lower positions may be achieved by sliding the rotational driving bit 20 in a vertical direction within the hole 25a.

Referring to the arrangement of this positional fixation, a recess 20e is provided at a suitable side face of the rotational driving bit 20, while retractable projections 25e are provided in the corresponding positions of the inner peripheral face of the exterior socket portion 25, so that the positional fixation can be performed by the mutual engagement between the projection 25e and recess 20e.

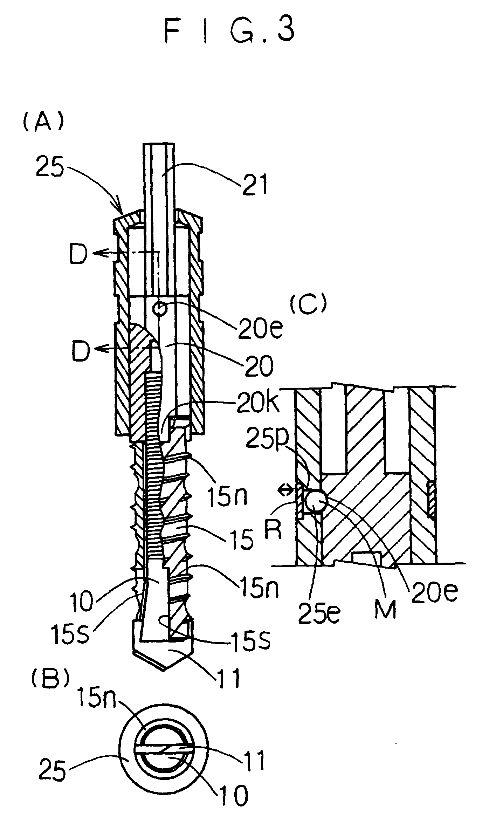

Fig.3 shows the state in which said anchor bolt and socket portion of the rotary tool are in engagement with each other, (A) being a partially cutaway view, (B) a bottom view of same, and (C) an enlarged view taken along line D-D of (A).

These drawings best show the state of engagement between the anchor and socket portion.

In the illustrated state, the rotational driving bit 20 which is positioned in the center of the socket portion is securely fixed in the interior of the exterior socket portion in the lower position. The anchor held in such a state can make a starting hole in a structure or both of a structure and an object being fixed (fitting).

When the rotational driving bit 20 is fixed in the upper position, the anchor and socket portion are disengaged from each other, whereby the exterior socket portion 25 is in turn able to engage with a nut which will be threadedly engaged with the external thread portion 20s of the anchor rod 10, which will be described later, so that the nut may be screwed up by the exterior socket portion 25. This enables the anchor rod 10 to move upward, followed by expansion of the leading end of the anchor sleeve 15, thereby to bring the anchor into a fixed contact with the structure, and concurrently the fitting is secured to the structure by the anchor.

Fig.3(B), which is a bottom view, clearly shows the shape of the plate-like drill blade 11, and fig.3(C) which is a cross sectional view, clearly shows the positional fixation of the rotational driving bit 20 to the exterior socket portion 25.

On the peripheral wall of the exterior socket portion 25 is provided a through-hole 25p incorporating a ball M which is always biased in an inward direction by a ring R disposed on the outer peripheral face thereof, and the elasticity of the ring R renders the ball M or projection 25e retractable from the peripheral wall inward. In such an arrangement, said positional fixation can be executed by the engagement of the projection 25e in the recess of the rotational driving bit 20.

By moving the rotational driving bit 20 up and down forcibly, the recess 20e may be attached to or detached from the upper projection 25e or lower projection 25e of the exterior socket portion 25, whereby the rotational driving bit 20 can be securely fixed to either the upper position or the lower position.

Variations of this positional fixation arrangement are of course applicable: the retractable projection is provided at the rotational driving bit 20's side and the hole or recess is provided in the position corresponding to the exterior socket portion 25 so that the projection may be attached to or detached from the hole or recess. Alternatively, it does not matter if the number of the retractable projection and the hole or recess which is to be fitted onto the former is not restricted to one.

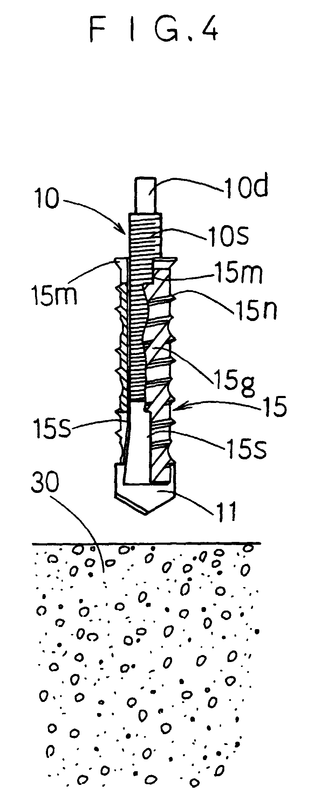

Fig.4 shows the state in which the anchor in accordance with the present invention is about to be driven into a concrete structure, but no tool is shown.

The drill blade 11 is integrally fixed to the leading end of the anchor rod 10. The anchor is driven into the structure by turning the anchor rod 10 and anchor sleeve 15 by means of the tool (not shown) with the point of the drill edge abutted against the structure substantially at right angles, and applying a striking power or vibration in addition to the turning effort.

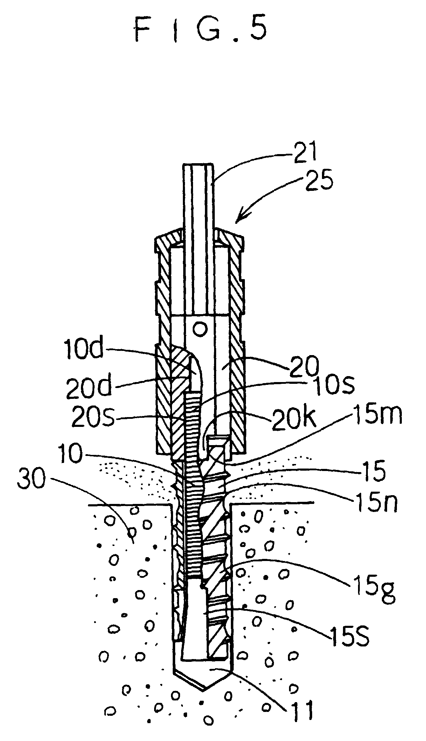

Fig.5 is a view explanatory of the state in which a starting hole in the concrete structure is being opened by giving a rotational driving force from the tool to the anchor with the socket portion of the tool placed in engagement with said anchor. In this event, though not shown in the drawing, it is possible to bore the starting hole from the upper portion of a fitting which is disposed on the structure, such as various kinds of fitment.

As apparent from the drawing, a tool engaging portion 10d on the basal end of the anchor rod 10 is engaged in an engaging hole 20d inside the rotational driving bit 20 of the tool, the external thread portion 10s of the anchor rod 10 sits in the cavity 20s of the rotational driving bit 20, then an engaging projection 20k positioned on the lower end of the rotational driving bit 20 is engaged in the groove portion 15m on the upper end of the anchor sleeve 15, whereby the anchor rod 10 and anchor sleeve 15 are rotated by means of the rotary tool to form a starting hole in the concrete structure.

Chips which may be generated from the concrete structure when the starting hole is in the making can be effectively discharged outwardly of the starting hole through the helical groove 15g formed on the outer peripheral face of the anchor sleeve 15 and the thread 15n of same.

As apparent from fig.5, with the anchor bolt having the self-drilling function in accordance with the first embodiment, the diameter of the drill blade 11, namely the lateral width of the drill blade 11 is essentially equal to the diameter of the thread 15n formed on the outer peripheral face of the anchor sleeve 15.

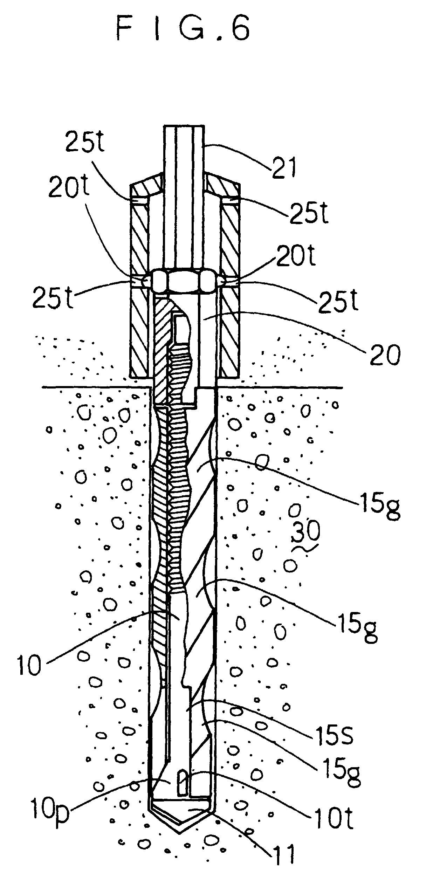

Fig.6 is a view explanatory of the state in which a starting hole has just been opened in the structure. It shows an anchor and a tool, both the articles being somewhat different from those in the above-mentioned embodiment.

That is, though the arrangement of the anchor is substantially the same as that of said embodiment, the helical groove 15g formed on the outer peripheral face of the anchor sleeve 15 has a larger width in this embodiment. The thread formed on the outer peripheral face of the anchor sleeve 15 is not shown.

Furthermore, in the present embodiment, there are provided projections 10t on two positions of the leading end 10p of anchor rod 10, namely one on this side of the drawing sheet and another one on the other side, in such a manner that said projections 10t may snugly fit in two slits 15s of the anchor sleeve 15. This helps the anchor rod 10 and anchor sleeve 15 rotate together. However, said projection 10t is optional because this embodiment is practicable without this member.

In the embodiment as shown in the previous drawings, as the drill blade 11 is snugly fitted in the slit 15s, the drill blade 11 plays the same role as that of said projection 10t.

It is preferable that the basal end of the anchor sleeve 15 should substantially be flush with the surface of the structure at the time when the boring of starting hole by the anchor is over.

Referring to the illustrated socket portion of the tool, the arrangement of the positional fixation of the rotational driving bit 20 disposed within the socket portion is different from that in the above-mentioned embodiment in that retractable projections 20t,20t are provided on the rotational driving bit 20 side, while holes 25t,25t are provided in the upper and lower corresponding positions of the exterior socket portion 25 respectively, whereby the rotational driving bit 20 can be fixedly secured to both the upper and lower positions by the engagement between these projections 20t and said holes 25t.

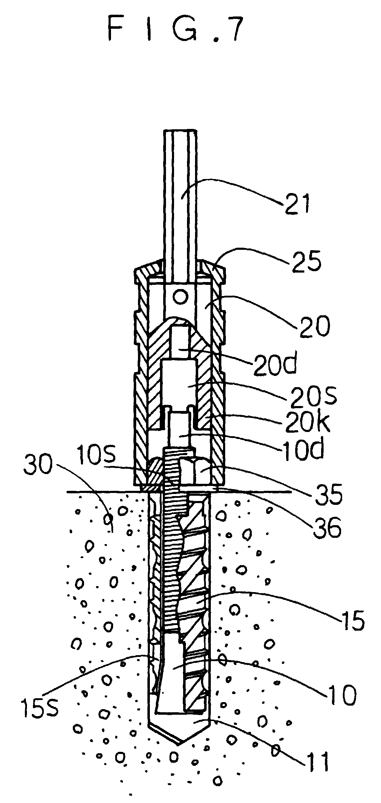

Fig.7 is a view explanatory of the state in which a fixing nut 35 is on the verge of being screwed to said anchor by said tool via a washer 36

In fig.6, after the anchor has opened a starting hole in the structure or the structure and the fitting, the socket portion of the tool is removed from the anchor, and the nut 35 is manually and threadedly engaged with the external thread portion 10s of the anchor rod 10 through the washer 36. Then, the rotational driving bit 20 of the tool is lifted and placed fixedly in an upper position to an extent that the top of the hole 25a of the exterior socket portion 25 may be engaged with the nut 35 only, and then, the nut 35 may be screwed by turning the tool.

In the course of threadedly engaging this washer 36 and nut 35 with the anchor rod 10, it is preferable, of course, that the nut 35 be fastened with fitments as fitting in position.

In fastening the nut 35, the provision of the raised rib on the lower face of the flange 15f on the leading end of the anchor sleeve 15 may cause prevention of any possible rotation of the anchor sleeve 15 together with the nut 35.

Usually, prior to fastening of the nut 35, the upper end portion of the anchor sleeve is hammered using a cylindrical fitment. This process may cause the raised rib provided on the lower face of the flange 15f on the upper end of the anchor sleeve to cut into the structure so as to avoid any turning of the anchor sleeve along with the nut in the event of the nut being fastened.

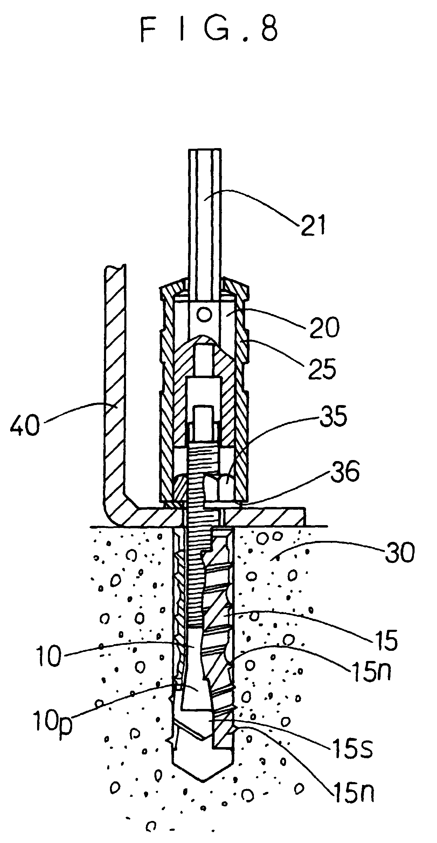

The state as shown in fig.8 is reached by starting the clamping of the nut 35 at the state shown by fig.7. Fig.8 shows that the nut 35 has been fastened with the fitment 40 as a fitting placed in position.

The rotating shaft 21 is rotatably driven by the rotational driving force of the tool, then, the rotational driving bit 20 secured to the rotating shaft turns (at this time, the rotational driving bit 20 is fixedly placed in an upper position inside the exterior socket portion 25), and the exterior socket portion 25 also turns with the rotation of the rotational driving bit 20 until the nut 35 is completely fastened.

As soon as the fastening operation is finished, the anchor rod 10 is lifted, and then, the leading end 10p of the anchor rod 10 expands the leading end of the anchor sleeve 15 due to the existence of the slits 15s provided on the leading end of the anchor sleeve 15. The leading end thus opened presses the inner peripheral face of the starting hole and the thread 15n provided on the outer peripheral face of the anchor sleeve 15 cuts into the inner peripheral face of the starting hole, so that as shown in fig.8, the anchor is fully fixed to the concrete structure together with the fitment as fitting.

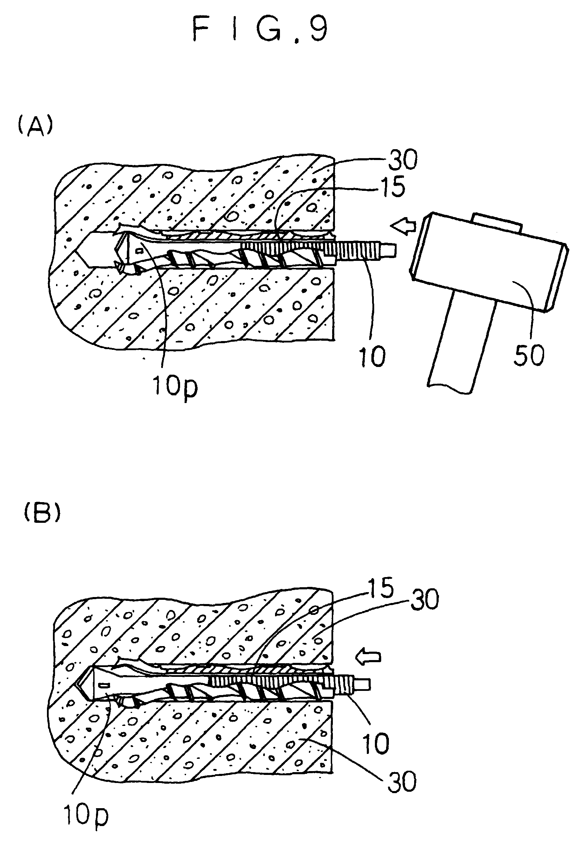

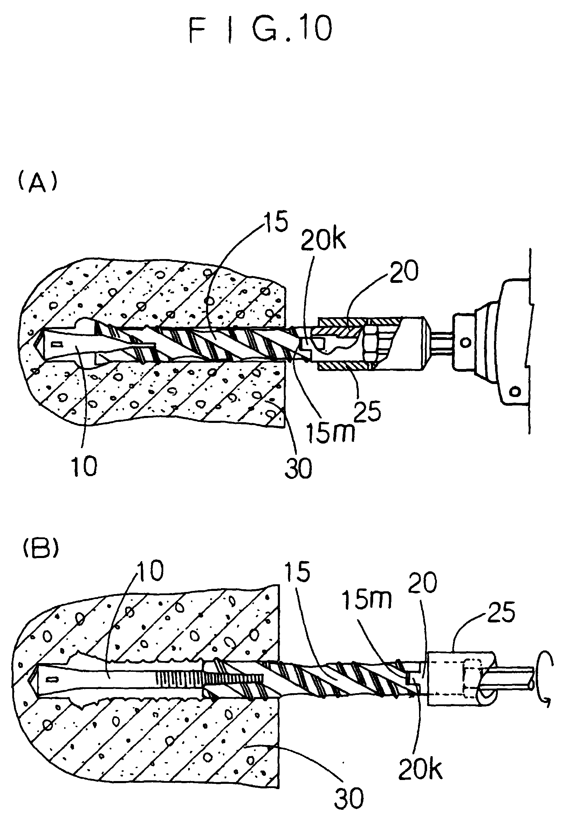

Figs.9 and 10 illustrate the procedure steps of dislodging the anchor bolt from the structure. The present invention is the first to easily remove the anchor bolt in this manner.

Fig.9(A) shows the state in which after removal of the fastened nut and washer together with the fitting, the anchor rod 10 is about to be stroke on the basal end thereof with a hammer 50 into the hole. Fig.9(B) shows the state in which said anchor rod 10 has reached the furthermost or deepest section of the starting hole whereby it has been released from the forced expansion toward the leading end of the anchor sleeve 25.

In this connection, it is shown in fig.9(A) that the anchor remains fixed to the concrete structure with the leading end of the anchor sleeve remaining broadened by the leading end 10p of the anchor rod 10.

The state in fig.9(B) is entered from the above state by driving the basal end of the anchor rod 10 with the hammer 50, wherein the anchor rod 10 is driven into the hole home so that the anchor rod 10 is released from its expansion toward the anchor sleeve 15. At this time, the leading end of the anchor sleeve 15 is still kept wide-open.

Next, the state as shown in fig.10(A) is reached. The rotational driving bit 20 within the socket portion of said tool that has been used in mounting of the anchor is placed in a lower position to be fitted by its engaging portion 20k in the leading end of the rotational driving bit 20 into the groove portion 15m of the basal end of the anchor sleeve 15. By turning the tool in a direction opposite to the direction of said mounting operation for the tool, the anchor sleeve 15 turns in a reverse direction to the direction of the mounting operation to be disengaged from the hole.

At this point, since the anchor rod 10 sits in the hole after driven home, and the internal engaging hole 20d of the rotational driving bit 20 and the tool engaging portion 10d at the basal end of the anchor rod 10 are out of engagement with each other, the anchor sleeve 15 only is pulled out of the hole.

Fig.10(B) shows the state in which the anchor sleeve 15 is about to be pulled out.

When the anchor sleeve 15 has been pulled out, the anchor rod 10 will remain in the hole, and in the absence of the anchor sleeve 15, the anchor rod 10 can be removed from the hole in a simple manner.

Thus, the anchor in accordance with the present invention may secure fittings such as various sorts of fitments to concrete structures by the use of the dedicated tool, and if it has become unnecessary, it can be readily removed from the structure using the same tool. It will be understood that neither such an anchor nor a tool has existed so far.

The above-mention embodiment may be changed in design in the following manner. The tool engaging portion 10d formed on the basal end of the anchor rod 10 may not always be of a square form but of a polygonal form in cross section. Therefore, different variations may be employed.

Referring to the drill blade 11 securely attached to the leading end, it may be formed directly on the leading end of the anchor rod by cutting operation.

The drill blade 11 may be fixed by brazing or caulking as needed.

The helical groove 15g defined on the outer peripheral face of the anchor sleeve 15 can be designed freely in width, depth, and inclination, and the thread 15n may be designed to discharge cuttings effectively in terms of shape.

The slits 15s formed on the leading end of the anchor sleeve 15 may be designed properly in number, length, etc. as needed.

The groove portion 15m provided as an engaging portion for the tool on the basal end of the anchor sleeve 15 may be designed freely. More than two groove portions are applicable. Any form of the groove will do as long as it can engage with the tool well.

Referring to the socket portion of the tool, though the cross sectional configuration of the hole 25a of the exterior socket portion 25 and the cross sectional configuration of the rotational driving bit 20 are of a hexagonal form like the configuration of the nut is. However, they may take the form of other polygons.

The engaging hole 20d defined in the center of the rotational driving bit 20 may be made identical to the tool engaging portion 10d of the anchor rod 10 in cross section. Different variations may be employed.

Although the rotating shaft 21 of the rotational driving bit 20 of the above-mention embodiment is of a hexagonal form in cross section, it may be freely made in different forms.

The positional arrangement of fixation for the rotational driving bit 20 which may move in the exterior socket portion 25 can be changed in design. As aforementioned, the retractable projection may be provided on the peripheral wall of the exterior socket portion, or on the rotational driving bit 20.

Furthermore, in said embodiment, both the anchor rod 10 and anchor sleeve 15 are adapted to turn together by the tool. However, it is naturally possible to strike the anchor rod 10 only resting in contact with the tool.

Namely, there is provided the tool engaging portion 10d in the basal end of the anchor rod 10, while no groove portion 15m as a tool engaging portion is positioned in the basal end of the anchor sleeve 15. In this case, as the anchor rod 10 and anchor sleeve 15 can rotate together suitably, it is preferable that the projection 10t well fitted in the slit 15s of the anchor sleeve 15 be formed in the leading end portion 10p of the anchor rod 10.

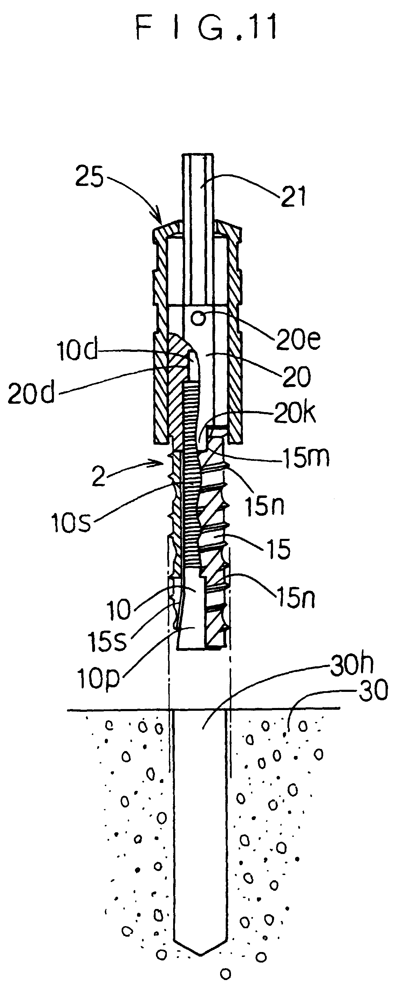

Next, the anchor bolt in accordance with another embodiment of the present invention will be described with reference to figs.11 to 13.

Unlike the above-mentioned anchor, the anchor bolt of this embodiment has no self-drilling function. Therefore, there is provided no drill blade in the leading end of the anchor rod. Other arrangements are substantially identical to those in the first embodiment.

On the other hand, the tool is the same as that of the first embodiment.

Fig.11 is a partially cutaway view explanatory of the state in which the anchor bolt in accordance with the other embodiment of the present invention linked to the socket portion of the tool is about to be screwed into the hole which has been formed beforehand in a structure.

The anchor bolt 2 comprises anchor rod 10 and anchor sleeve 15 fitted onto said anchor rod. There is provided an external thread 10s on the outer peripheral face on the basal end side of the anchor rod 10, and its leading end portion 10p has an outer diameter which becomes larger toward the leading end thereof.

The anchor sleeve 15 has a helical groove 15g formed on the outer peripheral face thereof for discharge of cuttings and a thread 15n for tapping operation. As apparent from the drawing, the thread 15n is divided into parts by said helical ridge 15g. The provision of such divided parts may improve the tapping effects. Therefore, this makes it possible to efficiently tap the inner peripheral face of the hole 30h of a concrete structure 30.

Additionally, there are provided on the lower end of the anchor sleeve 15 four slits 15s equally spaced in a peripheral direction to extend upward from the lower end.

The inner peripheral face on the lower end of the anchor sleeve 15 increases gradually in inner diameter downwardly along the shape of the leading end portion 10p of the anchor rod 10.

Prior to driving of the anchor bolt 2 into the structure, holes are bored with an electric power drill in the structure or the structure and fitting. In such a case, care should be taken in the inner diameter of said hole. It is important that the inner diameter in question be made smaller than the diameter of the thread provided on the outer periphery of the anchor sleeve 15, while larger than the root diameter.

This enables the thread 15n of the anchor sleeve 15 to tap the inner peripheral face of the hole 30h of the structure 30, so that the anchor bolt 2 may be firmly screwed into the structure in a stable manner.

Because the thread 15n formed on the anchor sleeve 15 has a tapping function, the metallic material of which the anchor sleeve 15 is made needs to be subjected to hardening. In this connection is essential the hardening of the anchor sleeve at least in the surface. This may prevent any abrasion of the thread 15n.

This embodiment is much the same as said previous embodiments in that both the anchor rod 10 and anchor sleeve 15 can be rotatably driven by the tool while the tool engaging portion 10d at the basal end of the anchor rod 10 is retained in engagement with the engaging hole 20d of the rotational driving bit 20 of the tool, and the groove portion 15m of the basal end of anchor sleeve 15 is fitted on the engaging projection 20k at the top of the rotational driving bit 20, thereby receiving the rotational driving force of the tool effectively too in the anchor bolt 2. With the tool positioned in engagement with the anchor bolt 2, the rotational driving bit 20 is securely placed in position (the lower position) on the leading end side in the external socket portion 25.

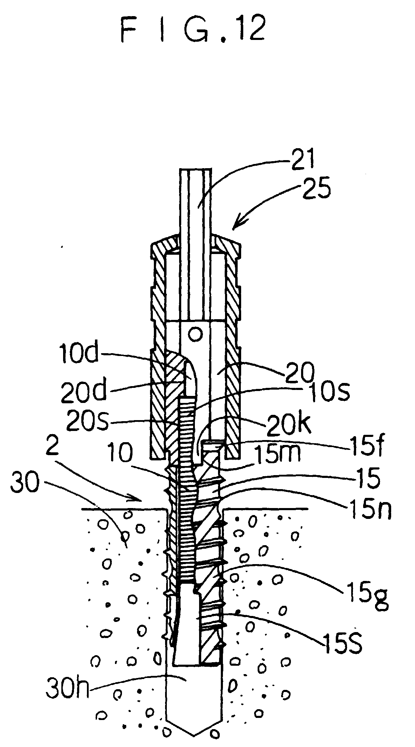

Fig.12 is a view explanatory of the state in which the anchor bolt 2 as shown in fig.11 is being screwed into the hole 30h of the structure 30 by giving the turning effort to the anchor bolt.

The anchor bolt 2 may efficiently be screwed into the hole 30h of the structure 30 by the rotational driving force which has been transmitted well to both the basal ends of the anchor rod 10 and the anchor sleeve 15.

In this event, the thread 15n formed on the peripheral face of the anchor sleeve 15 taps the inner peripheral face of the hole 30h. This may cause the anchor bolt 2 to be stably screwed into the hole 30h to afford increased retention of the anchor bolt against any drawing action.

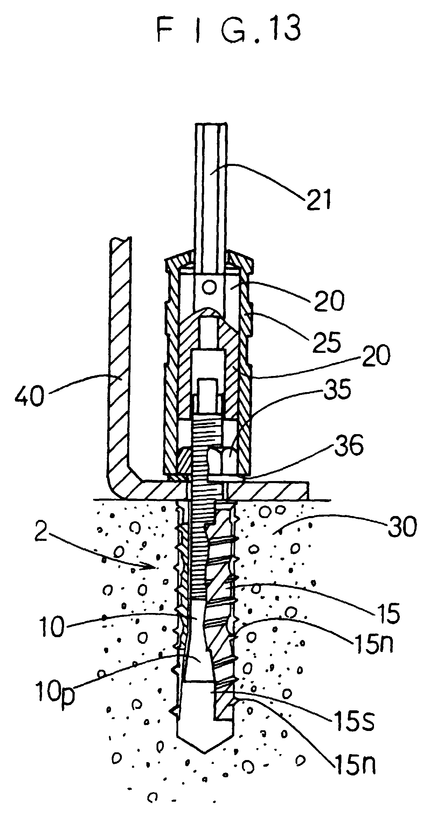

Fig.13 is a view explanatory of the state in which the nut has been fastened after the anchor bolt 2 had been driven into the hole and the fitting placed in position.

The fastening operation is continued from the state as shown in the previous drawing until the operation is completed with the flange 15f of the basal end portion of the anchor sleeve 15 completely screwed into the structure 30. In this position, the raised rib on the lower side of the flange 15f of the anchor sleeve 15 comes into a tight meshing relation with the structure. This may avoid the necessity of such an operation for striking the anchor sleeve 15 on the head as conventionally done, for by screwing the anchor bolt 2 by the application of the turning effort, the lower side of the flange 15d of the basal end portion of the anchor sleeve 15 is brought into a complete meshing relation with the structure 30. In this embodiment, there is no possibility that at the time of fastening the rod, the sleeve turns together even in the absence of the raised rib on the lower side of the flange 15f on the grounds that the sleeve has been screwed up.

Then, as shown in fig.13, the mounting of the fitting is followed by the fastening of the nut 35 via the washer 36 by means of the tool (in this case, the rotational driving bit 20 is securely positioned at the basal end portion side inside of the exterior socket portion 25). This may make the leading end of the anchor sleeve 15 expand so that the anchor may be reliably fixed to the structure 30, and the fitting is also fixed at the same time. This fastening operation may be a perfect prevention against the joint operation of the anchor sleeve 15 with other elements.

The anchor bolt 2 having the tapping function has been described above. The above-mentioned anchor bolt 2 in accordance with this embodiment is substantially identical to the anchor bolt of the first embodiment in all the arrangements except for the drill blade, and may employ the same tool as that in the first embodiment.

This embodiment is mainly characterised in that like the anchor in accordance with the first embodiment, the anchor rod and anchor sleeve constituting an anchor bolt can be rotatably driven together by the tool, and that the anchor is screwed as the starting hole is being tapped.

As above-mentioned, this embodiment is practicable even if both the anchor rod and anchor sleeve are not rotatably driven together. Namely, it is naturally possible that only the anchor sleeve, which is in engagement with the tool, is rotatably screwed down as the tapping operation takes place.

When the anchor bolt 2 is removed from the structure, the fixed nut, and then the fixed fitting are removed in this order, then, the anchor rod 10 is driven with a hammer into the hole, the rotational driving bit 20 of the tool is fixed in the lower position with its leading end engaged with the basal end portion of the anchor sleeve 15, and then, by turning the tool in a direction opposite to the direction of driving operation, the anchor sleeve 15 can easily be pulled from the structure 30. This point is much the same as in the first embodiment.

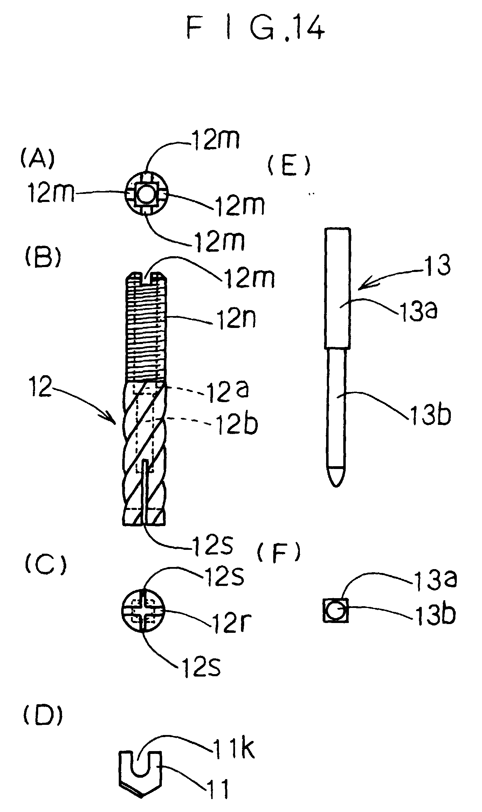

Next, figs.14 to 21 show an anchor bolt and its dedicated tool in accordance with another embodiment of the present invention. This anchor serves to strike and fix pins unlike the previous anchor system in which anchor rod is adapted to be lift.

Fig.14 is an exploded view of the anchor, (A) being a plan view of the anchor body, (B) a front view of same, (C) a bottom view of same, (D) a front view of a drill blade, (E) a front view of a driving pin, and (F) a bottom view of same.

Said anchor bolt comprises an rod-like anchor body 12 with a drill blade fixed to the leading end thereof, and a driving pin 13 received by a hole formed longitudinally of the center of the anchor body 12.

The hole of a suitable length is formed extending from the upper end of the anchor body portion 12 downward, and consists of an upper hole portion 12a of a square form in cross section and a lower hole portion 12b of a circular form in cross section. The cross sectional configuration of said upper and lower holes 12a,12b are made so as to agree with the cross sectional configuration of the driving pin 13. The pin 13 may be received by these hole portions.

The anchor body 12 is formed at its leading end with a slit 12s extending toward said lower hole portion 12b in its diametrical direction. Thanks to this slit 12s, the leading end of the anchor body 12 can be expanded by driving the driving pin 13 downward.

The drill blade 11 is fixedly brazed to the leading end of the anchor body 12. Namely, there is provided a groove portion 12r formed in a diametrical direction and perpendicular to the slit 12s provided on the leading end of the anchor body 12. The drill blade 11 is placed by its root in the groove portion 12r, and fixedly brazed to the latter. The fixation of the drill blade 11 is not restricted to this method. Caulking or other methods may be applied.

The drill blade 11 has a notch 11k formed extending from the substantially central portion at the root side downward. In driving the pin 13 into the hole of the anchor body 12, the tip of the pin 13 is adapted to enter the notch 11k.

There is provided an external thread 12n on the outer peripheral face of the upper side of the anchor body portion 12, in four sections on the upper face of which are formed grooves 12m crosswise in which the rotational driving bit of the tool is adapted to be engaged by the leading end thereof.

The external thread 12n is intended to be threadedly engaged with the nut for fixing the fitting.

On the other hand, on the lower outer peripheral face of the anchor body 12 are provided a helical ridge, and a thread as well actually, though not shown in the drawing. The helical groove and the thread are intended for discharging of cuttings or chips from the structure. The thread is intended to help the leading end of the anchor body 12 cut into the inner peripheral face of the starting hole of the structure when said leading end expands. This is the same in function as the thread provided in the anchor sleeve of the first embodiment.

As shown in figs.14(E)(F), the driving pin 13 has an upper half portion 13a of a regular square form in cross section, and a lower half portion 13b of a circular form in cross section, the tip portion of which has an inverted cone-like configuration so that it gradually decreases in its outline.

Consequently, the upper portion 13a of the driving pin 13 coincides with the upper hole portion 12a of the anchor body 12 in cross section, and the lower portion 13b of the pin 13 coincides with the lower hole portion 12b of the anchor body 12 in cross section.

The longitudinal length of the upper portion 12a of the anchor body 12 must be made at least equal to that of the upper portion 12a of the driving pin 13 in order that the slits 12s formed on the tip of the anchor body 12 may be expanded when the pin 13 has been driven into the hole of the anchor body 12.

The anchor in accordance with the present invention is completed by inserting the driving pin 13 into the hole of the anchor body 12, which is expanded at its leading end portion by driving the driving pin 13 home.

The upper portion 13a of the driving pin 13 having a square configuration in cross section provides a tool engaging portion which may be engaged with the rotary tool.

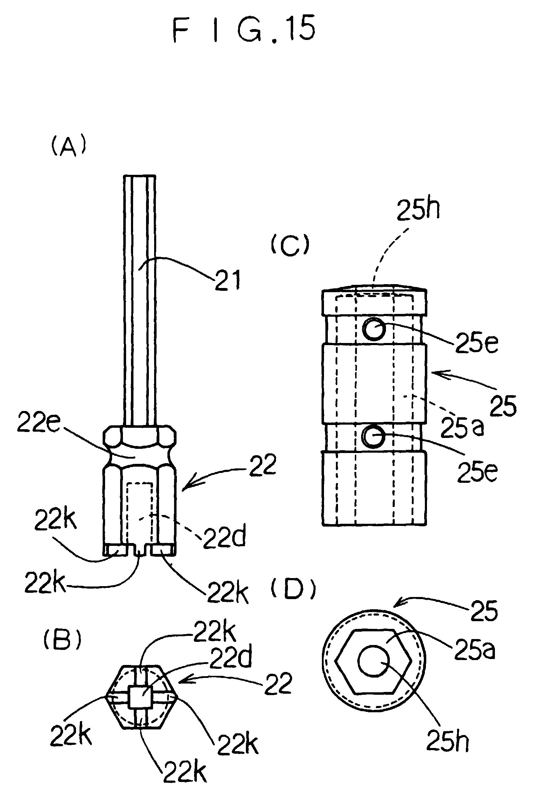

Fig.15 shows a socket portion of the rotational driving tool in accordance with another embodiment of the present invention, (A) being a front view of the rotational driving bit, (B) a bottom view of same, (C) a front view of the exterior socket portion, and (D) a bottom of same.

The rotary tool is intended for the anchor as shown in fig.4, being substantially identical to the rotary tool in accordance with the first embodiment, excepting the rotational driving bit 22 being somewhat different in part from that of the previous embodiment.

The rotational driving bit 22 has a rotating shaft 21 having a regular hexagonal shape in cross section and formed on the upper end portion, and the rotational driving bit 22 itself also has a regular hexagonal configuration in cross section, and an engagement hole 22d in a square cross section engageable with the upper portion 13a of said driving pin 13 and formed extending longitudinally of the center.

On the lower end face of the rotational driving bit 22 are formed engaging projections 22k crosswise, which are adapted to be interlocked with the groove portions 12m on the upper end portion of the anchor body 12.

There is provided a depression 22e formed all over the face of the outer peripheral face of the upper portion of the rotational driving bit 22. Said depression 22e and any one of the retractable projections 25e provided on an external socket portion which will be described later are engaged with each other so that the rotational driving bit 22 can be placed either in an upper or a lower position.

It does not matter, of course, if the depression 22e has a circular shape as in the first embodiment.

The exterior socket portion 25 is substantially identical to that of the previous embodiment; it consists of a tubular body provided with a hole 25a having a hexagonal form in cross section and extending longitudinally of the center, and at the upper end of the hole 25a is formed an opening 25h that rotating shaft 21 of the rotational driving bit 22 may pass through.

The projections 25e, which are retractable from the inner face of the peripheral wall inwardly of the exterior socket portion 25, are provided in through-holes placed in suitable positions on the peripheral wall of the exterior socket portion 25.

These projections 25e, which are disposed on two upper and lower sections, may be fitted in any of the depressions formed on the upper peripheral face of the rotational driving bit 22 so that the rotational driving bit 22 can be placed either in an upper or a lower position.

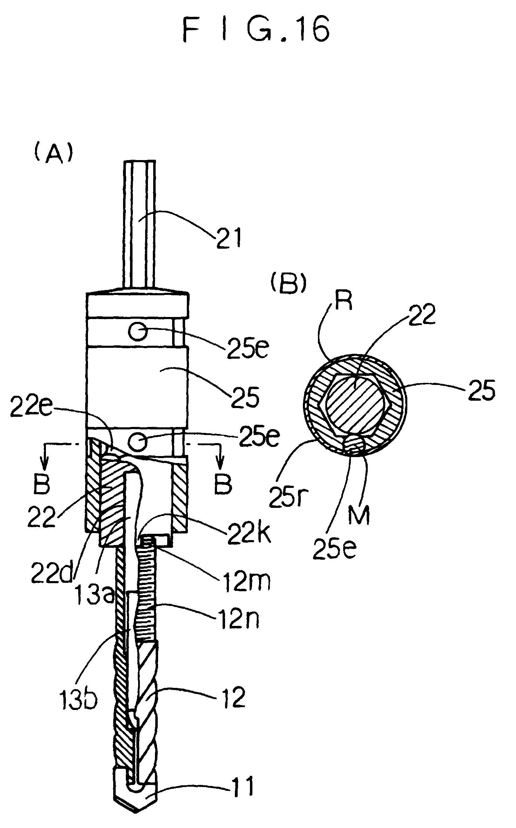

Fig. 16 shows the state in which said anchor bolt and rotary tool are in engagement with each other, (A) being a partially cutaway view, and (B) a cross section view taken along line B-B of (A).

In fig.16(A), the rotational driving bit 22 is placed in a lower position of the exterior socket portion 22. In other words, the depression 22e is fitted on the lower projection 25e of the exterior socket portion 25, and the engaging hole 22d of the rotational driving bit 22 and the upper portion 13a of the driving pin 13 are engaged with each other, and the engaging projections 22k of the rotational driving bit 22 and the groove portion 22m formed on the upper end of the anchor body 12 are engaged with each other.

Fig.16(B), which is a cross sectional view taken along the line B-B, clearly shows the construction in which the rotational driving bit 22 can be fixedly positioned within the exterior socket portion 25. Namely, a ball M is arranged in the opening formed on the peripheral wall of the exterior socket portion 25, and a ring R made of a leaf spring is mounted on the outer periphery of the exterior socket portion 25, so that the ball M is always springy-biased inwardly of the hole 25a of the exterior socket portion 25 thereby to keep it in a protrusive position.

The ball M constitutes projection 25e, and is retained in engagement with the depression 22e formed on the outer peripheral face of the rotational driving bit 22. When the rotational driving bit 22 is fixed in the upper position, the exterior socket portion 25 is forcibly pulled downward until both of them are disengaged one from the other. Then, the depression 22e of the rotational driving bit 22 is engaged with the upper projection 25e of the exterior socket portion 25, whereby the rotational driving bit 22 may be fixedly placed in the upper position inside of the exterior socket portion 25.

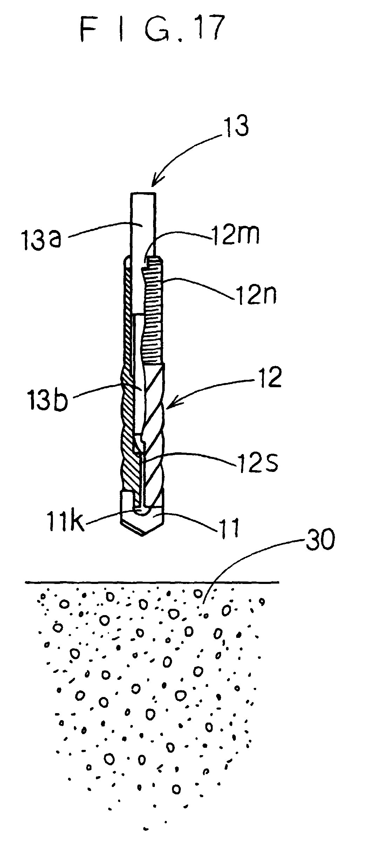

Fig. 17 shows the state in which the anchor in accordance with the above-mentioned embodiment is about to be driven into the concrete structure, but no rotary tool is illustrated.

The dull blade 11 is integrally locked to the leading end of the anchor body portion. With the drill blade 11 abutted substantially at an angle of 90° to the structure, the anchor is driven by turning the anchor body 10 and the driving pin 13 together by the rotary tool (not shown), or as the case may be, in addition, by applying a driving force to the anchor.

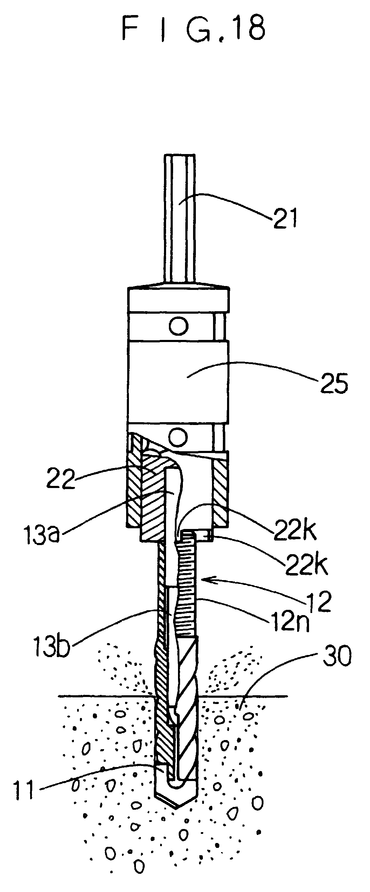

Fig. 18 is a view explanatory of the state in which the rotational driving force of the rotary tool with the socket portion coupled with said anchor is applied to the anchor to make a starting hole in the concrete structure. It is naturally possible that though not illustrated, the starting hole is pierced in the structure through a fitting such as fitment disposed on the structure.

As apparent from the drawing, with the upper portion 13a as the tool engaging portion of the driving pin 13 engaged with the internal engaging hole 22d of the rotational driving bit 22 of the tool, while the engaging projection 22k on the lower end of the rotational driving bit 22 is engaged with the engaging groove portion 12m on the upper end of the anchor body portion 12, the driving pin 13 and anchor body 12 are turned together by the rotary tool to the extent that a starting hole is dug in the concrete structure.

Cuttings which may be produced by the hole cutting can be discharged well outside of the starting hole by helical groove and the thread (not shown) formed on the lower outer peripheral face of the anchor body 12.

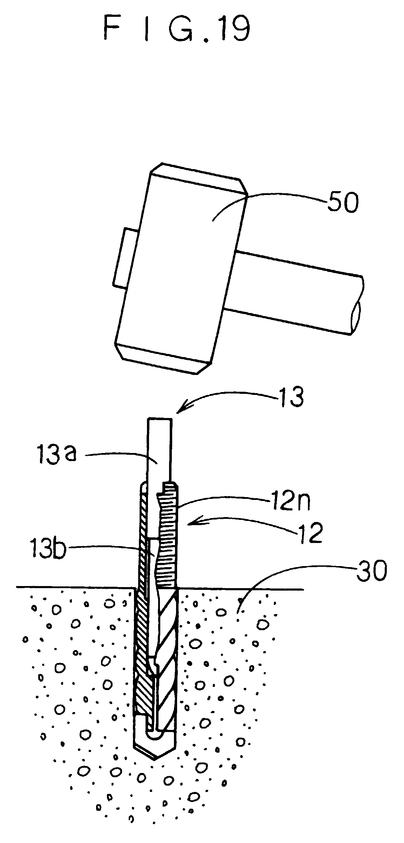

Fig. 19 is a view explanatory of the state in which while said anchor is screwed up to the structure, the driving pin is about to be driven with a hammer. This is a stage in which the cutting of starting hole has been finished, and the anchor is going to be fixed to the structure 30.

At this point, by striking the driving pin 23, the tip of the driving pin 13 intrudes itself from the hole of the anchor body 12 into the slit 12s, whereby the slit and the leading end of the anchor body 12 are expanded at the same time.

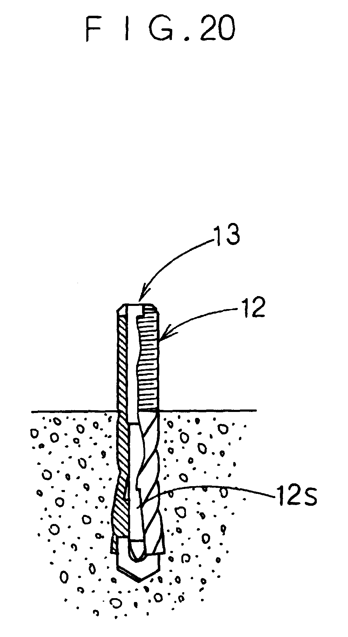

Fig.20 is a view explanatory of the state in which the driving pin 13 has been completely driven by the hammer 50 as shown in the previous drawing into the anchor body 12.

As apparent from the drawing, the tip of the driving pin 13 intrudes itself into the slit 12s, so that the latter is opened wide and the leading end of the anchor body 12 is left wide-open. When the anchor body 12 becomes wide-open at its leading end, the inner peripheral face of the hole cut into the structure is so pressed by the leading end that the anchor is fixed completely to the structure.

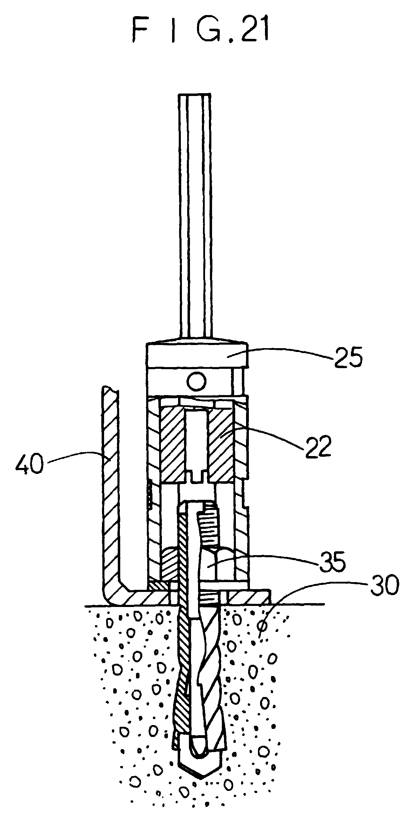

Then, the procedure step goes to the aspect as shown in fig.21, which is a view explanatory of the state in which the fitting is fixed to the structure; with the fitting as fitment mounted on the fixed anchor, the nut 35 is threadedly engaged through the washer with the external thread portion 12n of the anchor body 12, and the fitting is securely fixed to the structure 30 by fastening the nut 35 using the rotary tool again.

With the rotational driving bit 22 of the tool fixedly placed in the upper position inside of the exterior socket portion 25 and the nut 35 engaged in the hole formed in the exterior socket portion 25 and having a hexagonal configuration in cross section is achieved the fastening of the nut 35.

Unlike the first embodiment, in the self-drilling anchor in accordance with the present embodiment, once the anchor has been fixed to the structure, the anchor cannot be removed from the structure in a simple manner.

The present embodiment has been described with reference to figs.14 to 21 so far. This embodiment can be modified into various forms as follows.

The tool engaging portion (upper portion 13a) formed in the basal end of the driving pin 3 may have not only a square form but also polygonal configurations in cross section. Different cross sectional configurations can be employed. In short, the tool engaging portion will do if it may accord with the upper hole of the anchor body 12 in cross section. In such a satisfactory state, the anchor body 12 can also be turned concurrently with the rotation of the driving pin by means of the tool.

The drill blade 11 fixed to the leading end of the anchor body 12 can be formed directly on the leading end of the anchor body by cutting operation.

Any suitable fixing method for drill blade 11 may be freely utilised.

The helical ridge formed on the peripheral face of the anchor body 12 may be freely designed in width, depth, and inclination. Additionally, the thread (not shown) defined on the outer peripheral face may also be so designed as to discharge chips in an effective manner.

It is optional with users to determine the number or length of the slit 12s formed on the leading end of the anchor body 12 as needed.

The groove 12m as an engaging portion for tool formed on the basal end of the anchor body 12 may be freely modified in design on condition that more than two grooves are provided and can suitably engage with the tool.

Referring to the socket portion of the tool, the hole 25a of the exterior socket portion 25 and the rotational driving bit are of a regular square form in cross section like the configuration of the nut, as in the first embodiment, but they may be modified into any other regular polygonal form.

The engaging hole 22d formed in the center of the rotational driving bit 22 may be made identical to the basal end of the driving pin 13 in cross section. Different variations in cross sectional configuration may be made.

Although the rotating shaft 21 of the driving bit 22 has a hexagonal form in cross section in said embodiment, any sectional form can be designed in a completely free manner.

The construction of positional fixation for the rotational driving bit 22 which is movable within the exterior socket portion 25 can be changed in design in various manners as in the first embodiment.

Furthermore in this embodiment, with tool engaged with the basal end of the anchor body 12 only, it is naturally possible that the anchor is struck by rotatably driving the anchor body 12 only.

In this case, the upper portion 13a serving as a tool engaging portion for the driving pin 13 is made circular in cross section with the result that no driving force will be transmitted because the upper portion needs no rotatable engagement with the tool.

Even if the tool and the driving pin 13 are not in a rotatable engagement with each other, the upper portion 13a of the driving pin 13 is adapted to be received by a reception hole provided extending from the lower end of the rotational driving bit 22 longitudinally of the center, thereby keeping the engagement between the tool and anchor very stable.

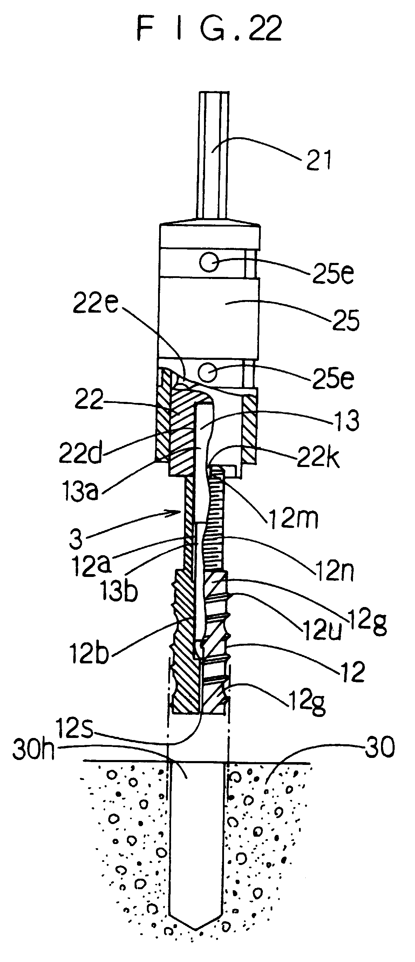

Figs.22 to 24 illustrate anchor bolt in accordance with further embodiment of the present invention. The tool which is used in this embodiment is the same as that shown in figs.14 to 21.

Fig.22 is a partially cutaway view explanatory of the state in which the anchor is about to be screwed into the hole bored in the concrete structure in advance.

The illustrated anchor bolt 3 is different from that as shown in figs.14 to 21 in that the anchor body 12 has a leading end wanting a drill blade and that the anchor body 12 has a tapping thread 12u formed on the lower outer peripheral face thereof (the thread in accordance with the previous embodiment is intended for discharge of chips or cuttings and for the leading end of the anchor body 12 which can cut into the inner peripheral face of the starting hole when said leading end expands.), though said anchor bolt 3 is substantially identical to the counterpart in the previous embodiment in other points.

The anchor body 12 includes a proper length of bole into which a pin is to be driven and which extends from the basal end of the anchor body 12 to the leading end thereof, an external thread 12n formed on the upper peripheral face thereof, and a helical groove 12g and tapping thread 12u formed on the lower peripheral face thereof. The anchor body 12 has slits 12s extending from the leading end thereof to said hole to pass through the axial center and formed crosswise, and a driving pin 13 may be fitted into said hole.

The hole of the anchor body 12 and the driving pin 13 are the same in cross section as those in the previous embodiment. Namely, the upper hole 12a of the anchor body 12 has a square shape in cross section, and the lower hole 12b has a circular shape in cross section, while the upper portion 13a of the driving pin 13 has a square shape in cross section, and the lower portion has a circular shape in cross section.

In such an arrangement, by turning the upper portion 13a of the driving pin 13 using the tool, the anchor body 12 is turned simultaneously, whereby the entire anchor is actuated to rotate.

The tool, which is the same as that shown in fig.15, may be engaged with the basal end of the driving pin 13 and the basal end of the anchor body 12 so as to transmit the driving force to both the members when the rotational driving bit 22 has been fixed to a lower position inside of the exterior socket portion 25.

Since this tool will do for transmitting the driving force to only the driving pin 13 of the anchor bolt, the rotational driving bit 22 has only to engage with the basal end of the driving pin 13. This is common to the embodiment as shown in fig.15.

Prior to screwing the anchor bolt 3 into the concrete structure, the hole 30h must be pierced in the structure 30, and besides, the inner diameter of the hole 30h must be made smaller than the thread diameter of the thread 12u formed on the lower outer peripheral face of the anchor body 12 and larger than the root diameter of the thread 12u. This allows the thread 12u to suitably tap the inner peripheral face of the hole 30h.

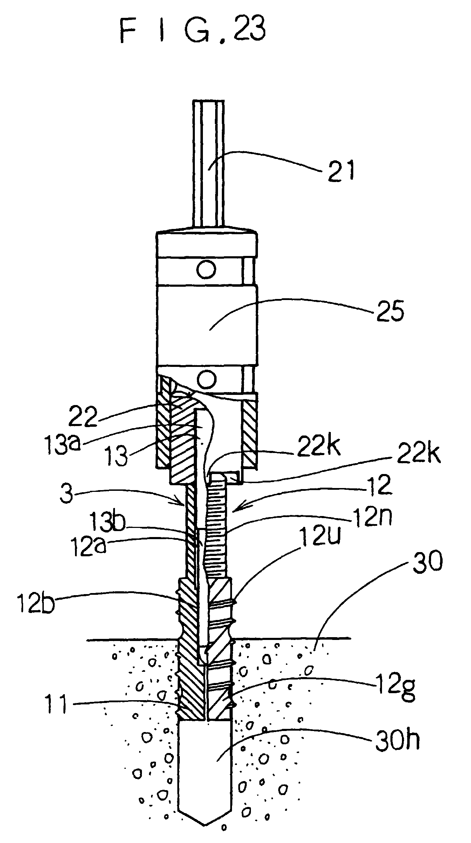

Fig.23 is a partially cutaway view explanatory of the state in which the anchor bolt 3 as shown in fig.22 is screwed into the hole 30h of the structure 30. As apparent from the drawing, in the anchor bolt 3, both the driving pin 13 and the anchor body 12 are rotatably driven by the rotational driving bit 22 of the tool so that the tapping thread 12u formed on the lower outer peripheral face of the anchor body 12 is forcibly screwed up as it is tapping the inner peripheral face of the hole 30h of the structure 30.

Thus, the anchor bolt 3 has been screwed into the structure 30 in so a stable condition as to afford increased retention of the anchor bolt against pull.

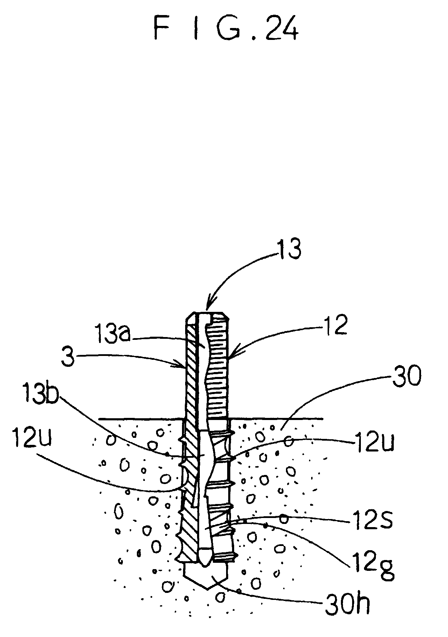

Fig.24 is a partially cutaway view explanatory of the state in which the anchor bolt 3 has been screwed into the structure 30, the driving pin 13 has been driven into the hole with a hammer, and then, the anchor bolt 3 is fixedly placed in position in the structure 30.

As shown in fig.23, when the anchor bolt 3 has been rotatably driven into the structure 30 by the tool and the thread formed on the lower outer peripheral face of the anchor body portion 12 has cut in the hole 30h of the structure 30, the screwing of the anchor bolt 3 is completed.

Then, by driving the driving pin 13 with a hammer into the hole of the anchor body portion 12, the slits 12s are expanded by the tip of the driving pin 13, and at the same time, the leading end of the anchor body 12 so broadens that the leading end portion presses the inner peripheral face of the hole 30h, whereby the anchor bolt 3 may be securely fixed to the structure.

The anchor of this embodiment as shown in figs.22 to 24 is different from the anchor as shown in fig.14 in that no drill blade is formed in the leading end and the tapping thread is provided on the lower outer peripheral face of the anchor body, except that other constructions are substantially identical to those in the previous embodiment.

The tapping thread 12u formed on the lower outer peripheral face of the anchor body portion 12 and the helical groove can be made similar to those formed in the anchor sleeve 15 of the anchor bolt 2 as shown in figs.11 to 13.

Consequently, modification of those members in design can be carried out in the same manner as the previous embodiments.

In the embodiment as shown in figs.22 to 24, both the driving pin 13 and anchor body 12, or only the driving pin 13 can be rotatably driven by the tool, as above-mentioned. Moreover, with the tool interlocked only to the anchor body portion 12 can be transmitted the driving force to the anchor body portion 12.

In such an occasion, the upper portion 13a of the driving pin 13 (tool engaging portion) and the engaging hole 22d of the rotational driving bit 22 of the tool do not need to have a square or polygonal configuration in cross section respectively. For example, both the members are made circular in cross section so that the driving force will not run between both of them.

Even in the event that the tool and the driving pin 13 are out of engagement with each other, the upper portion 13a of the driving pin 13 is received by the reception hole provided extending from the lower end face of the rotational driving bit 22 longitudinally of the center, thereby securing a highly stable engagement between the tool and the anchor.

The anchor bolt in accordance with the first invention is designed to be fixed by lifting it the anchor rod. Both the anchor rod and anchor sleeve, or the anchor sleeve only may be rotatably driven by the tool to transmit from the tool to said member or members a sufficient driving force, which may help the thread formed on the outer peripheral face of the anchor sleeve tap the inner peripheral face of the starting hole of the structure to a suitable degree so that the anchor can be screwed into the starting hole stably and efficiently.

Such a tapping operation by the thread formed on the outer peripheral face of the anchor sleeve may increase retention of the anchor against pull in the structure.

On the other hand, if a necessity occurred for dislodging the anchor from the structure, the fitting is removed, then, the anchor rod is driven into the starting hole, the anchor sleeve in an engagement relation by its basal end with the tool is turned in the direction opposite screwing, whereby the anchor sleeve can be removed easily.

Referring to the anchor bolt in accordance with the second invention of the present application, the anchor has an additional self-drilling function because it is formed with a drill blade on the leading end of the anchor rod. As using this drill blade, a starting hole is being dug in the structure, or both the structure and the fitting, the anchor may be driven into the structure. In this case, as in the first embodiment, when the anchor rod and anchor sleeve are rotatably driven together, the driving force of the tool may be very well transmitted to the anchor to ensure that the driving ability or driving efficiency will be maintained well.

When the anchor rod and anchor sleeve are rotatably driven together, chips or cuttings produced in the drilling operation can be discharged smoothly, and the thread on the outer peripheral face of the anchor sleeve will also help discharge the chips.

Additionally, when the anchor sleeve has expanded, the thread cuts into the inner peripheral face of the starting hole thereby to afford increased retention of the anchor against pull in the structure.

The anchor bolt in accordance with the third invention of the present application is designed to be fixed by driving the pin. The anchor body or the driving pin, or both of them are rotatably driven by the tool to transmit a sufficient driving force of the tool to said members, whereby the thread formed on the lower outer peripheral face of the anchor body portion taps the inner peripheral face of the starting hole of the structure so as to be screwed into the hole with the consequence that the anchor may stay in the starting hole in a stable condition.

Such a tapping operation by the thread formed on the lower peripheral face of the anchor body portion may also increase retention of the anchor against pull in the structure.

The anchor bolt in accordance with the fourth invention of the present application is arranged such that the driving pin may accord with the hole of the anchor body in cross section at the respective upper portions so that both of them can turn together in complete unison. This may turn the entire anchor only by giving the driving force to the driving pin.

In addition to the effects of the third and fourth inventions, as provided with a drill blade, the anchor bolt in accordance with the fifth invention of the present application can dig a starting hole in the structure, or the structure and the fitting, while it is being driven into the structure.

Chips or cuttings produced from the structure in the drilling operation by the drill blade can be discharged well from the starting hole. The thread formed on the lower peripheral face of the anchor body may play a role in discharging these chips.

When the leading end of the anchor body has expanded, the thread may cut well into the inner peripheral face of the starting hole opened by the drill blade so as to increase retention of the anchor against pull in the structure.

The tool in accordance with the sixth invention of the present application is a dedicated tool which can work to drive or remove the anchor bolts in accordance with the first to fifth inventions into or from the structure in an efficient manner.

Referring to said anchors of anchor rod lifting-and-fixing type in accordance with the first and second inventions, in screwing or driving the anchor, the rotational driving bit is securely placed in position in the leading end of the exterior socket portion so as to engage it with the basal ends of anchor rod and anchor sleeve, or the basal end of the anchor sleeve, whereby the driving force can be transmitted to these members so that screwing or driving of the anchor can be performed efficiently.

After screwing or driving the anchor into the starting hole, the rotational driving bit is moved to the basal end of the exterior socket portion and fixed there so as to clamp the nut tightly.

Consequently, since the anchor of this type can carry out the operations of driving and fixation using a single tool, it may contribute not only to the increase of workability but also to labor-saving, as compared with the conventional driving operations. Conventionally, at least two tools, i.e. an anchor driving tool and an anchor rod fastening tool (further an anchor sleeve driving tool) were needed.

On the other hand, in connection with the anchor bolt which can be lifted to be held tight, the anchor can be removed from the structure by this tool as needed.

Namely, with the rotational driving bit of the tool securely placed in a position at the basal end side of the interior of the exterior socket portion attached to a fixing nut, the rotational driving bit is clamped and turned in a reverse direction to remove the fitting, and then, the anchor rod is driven into the starting hole with a hammer, then, the leading end of the rotational driving bit is fitted to only the basal end of the anchor sleeve, and by turning the anchor in a reverse direction to the direction in which the anchor is mounted, the anchor sleeve can be removed, thereby enabling the anchor to be removed from the structure in a simple manner.

Referring to the anchors of a pin driving-and-fixing type in accordance with the third to fifth inventions, with the rotational driving bit of the tool securely placed in a position at the leading end side in the exterior socket portion, the leading end of the rotational driving bit is engaged with the basal end of the driving pin or the basal end of the anchor body, or both of them, so that the anchor can be screwed or driven efficiently.

After the anchor has been screwed or driven, the driving pin is driven with a hammer into the hole of the anchor body, whereby the anchor can be fixed to the structure.

After the anchor has been fixed, the fitting is mounted, the nut is screwed up through the washer, and is engaged with the exterior socket portion, at the basal end of which the rotational driving bit has been securely placed in a position at the basal end side of the interior of the exterior socket portion, which is then turned, whereby the fitting can be held tight on the structure.

As mentioned above, all or most of the operations for the anchor bolt can be carried out by this dedicated tool so that more increase of the operation in efficiency and more labor-saving can be put into realisation as compared with the conventional operation processes.

## Claims

1. An anchor bolt comprising an anchor rod, and an anchor sleeve having slits on the leading end thereof, which is adapted to be fitted onto said anchor rod, wherein by lifting the anchor rod, the leading end of the anchor sleeve expands, and the anchor bolt is securely fixed to a structure, characterised in that;
a thread is formed on the outer peripheral face of the anchor sleeve;
a tool engaging portion is provided for engaging with a tool at the basal end of the anchor rod, and/or a tool engaging portion is provided for engaging with the tool at the basal end of the anchor sleeve; and
by turning both the anchor rod and anchor sleeve, or the anchor sleeve by the use of the tool, while being screwed into the structure, a thread formed on the outer peripheral face of the anchor sleeve may tap the inner peripheral face of a drill hole of the structure.

2. The anchor bolt as defined in claim 1 characterised in that a drill blade is provided on the leading end of the anchor rod for boring a hole in the structure, or both the structure and a fitting.

3. An anchor bolt wherein a proper length of hole into which a pin is to be driven is formed in the center of an anchor body to extend from the basal end toward the leading end thereof, and slits are formed extending from the leading end of the anchor body to said hole, that a driving pin is fitted and driven into said hole, whereby the anchor body expands at the leading end thereof to such a degree that the anchor bolt may be fixed to a structure, characterised in that;
a thread is formed on the lower outer peripheral face of the anchor body;
a tool engaging portion is provided at the basal end of the driving pin for engaging with the tool and/or a tool engaging portion is provided on the basal end of the anchor body for engaging with the tool; and
by turning one or both of the driving pin and anchor body by the use of the tool, while tapping the inner peripheral face of a drill hole of the structure, a thread formed on the lower peripheral face of the anchor body is screwed into a drill hole of the structure.

4. The anchor bolt as defined in claim 3 characterised in that the cross sectional configuration of at least upper portion of the driving pin and the cross sectional configuration of at least upper portion of the pin driving hole formed in the center of the anchor body are made in so a configuration that both the driving pin and pin driving hole in a square or polygonal form can turn together, so that by turning only the driving pin by the tool, the anchor body can also be turned simultaneously.

5. The anchor bolt as defined in claim 3 or 4 characterised in that a drill blade is provided on the leading end of the anchor body for boring a hole in the structure, or both the structure and the fitting.

6. A tool for mounting an anchor bolt having an anchor rod and an anchor sleeve or the like, to a structure comprising a rotary driving portion, a rotating shaft for transmitting the rotary driving force of said rotary driving portion, and a socket portion provided on the leading end of the rotating shaft, characterised in that;
said socket portion comprises an exterior socket portion positioned at the outside, and a rotational driving bit which is movable axially within the exterior socket portion;
the exterior socket portion may turn with the rotation of the rotational driving bit;
the rotational driving bit can change its position at least two places arranged in a longitudinal direction, one being at the leading end side and the other at the basal end within the exterior socket portion;
an engaging hole is provided in the longitudinal direction of the center of the rotational driving bit so as to engage with the basal end of the anchor rod or the like;
the leading end of the rotational driving bit can be engaged with the basal end of the anchor sleeve or the like,
the exterior socket portion can be engaged with the nut which can threadedly engage with the anchor bolt when the rotational driving bit is securely placed in a position at the basal end side within the exterior socket portion; and
when the anchor is screwed or driven, the rotational driving bit securely positioned at the leading end side inside of the exterior socket portion engages at the basal ends with the anchor rod and anchor sleeve, or at the basal end with any of the two, whereby the driving force can be transmitted to the anchor bolt.
